# EUROPÄISCHE PATENTSCHRIFT

(11) **EP 0 705 555 B1**
(45) Veröffentlichungstag und Bekanntmachung des Hinweises auf die Patenterteilung: **22.01.1997**
(21) Anmeldenummer: 95114911.1
(22) Anmeldetag: 21.09.1995
(51) Int. Cl.: A47J 41/02

(54) **Isolierkanne und Schau-, Verkaufs- und Verpackungsanordnung dafür**
Insulating vessel and arrangement for showing, selling and packing such a vessel
Récipient isolant et ensemble de démonstration de vente et d'emballage pour un tel récipient

(30) Priorität: 06.10.1994 DE 4435786; 06.04.1995 DE 19513019
(43) Veröffentlichungstag der Anmeldung: 10.04.1996
(73) Patentinhaber: alfi Zitzmann GmbH Isoliergefässe und Metallwaren, D-97877 Wertheim (DE)
(72) Erfinder: Dümmig-Zitzmann, Jörg, D-97877 Wertheim (DE)
(74) Vertreter: Schwan, Gerhard, Dipl.-Ing.

(56) Entgegenhaltungen:
- BE-A- 1 001 060
- DE-U- 8 814 820
- FR-A- 773 566
- GB-A- 1 281 534
- GB-A- 2 052 726

## Beschreibung

Die Erfindung betrifft eine Isolierkanne gemäß dem Oberbegriff des Anspruchs 1 (vgl. Dokument BE-A-1001060), mit einem Isoliergefäß, das in einem Kannengehäuse untergebracht ist, sowie eine Schau-, Verkaufs- und Verpackungsanordnung für eine solche Isolierkanne.

Bekannte Isolierkannen dieser Art wurden bisher, wie andere bekannte Isolierkannen auch, vom Kannenhersteller fertig montiert in einem oder wenigen unterschiedlichen Design(s) auf den Markt gebracht. Dabei kann das Kannengehäuse gegebenenfalls mindestens teilweise aus unterschiedlichen Werkstoffen, insbesondere Metall und/oder Kunststoff gefertigt sein. Der Benutzer (Käufer) wählt, falls überhaupt unterschiedliche Designs und/oder unterschiedliche Werkstoffe für ein und den selben Isolierkannentyp zur Verfügung stehen, beim Händler das ihm jeweils am besten zusagende Design und gegebenenfalls den gewünschten Werkstoff aus.

Ähnlich wie im Falle der Kleidung ist jedoch die Tafelausstattung nicht nur Modeströmungen unterworfen, sondern in erheblichem Umfang auch abhängig von dem persönlichen Geschmack des Anwenders sowie von dem jeweiligen Anlaß und/oder sonstigen Umständen der Benutzung. Es wäre daher wünschenswert, den optischen Eindruck oder die Aufmachung auch einer Isolierkanne neuen Trends und/oder persönlichen Präferenzen und/oder besonderen Gelegenheiten mit vertretbarem Aufwand anpassen zu können. Bisher waren der Auswahl aber zwangsläufig enge Grenzen gesetzt. Sofern eine solche Auswahl überhaupt möglich war, mußte häufig eine vorhandene Isolierkanne gegen einen neue ersetzt werden, selbst wenn letztere noch einwandfrei funktionierte und nur geschmacklich überholt war.

Der Erfindung liegt die Aufgabe zugrunde, eine Isolierkanne zu schaffen, die selbst von einem Laien leicht und mit vergleichsweise geringem Aufwand in ihrer ästethischen Gesamtwirkung geändert und zum Beispiel an unterschiedliche geschmackliche Anforderungen angepaßt werden kann, sowie ein System zu schaffen, das den unterschiedlichen Vorstellungen, Bedürfnissen und Wünschen der Benutzer solcher Isolierkannen wesentlich flexibler und wirkungsvoller gerecht werden kann, als dies bisher möglich ist.

Diese Aufgabe wird von einer Isolierkanne und einer Schau-, Verkaufs- und Verpackungsanordnung erfindungsgemäß dadurch gelöst, daß das Kannengehäuse ein Rahmengestell und einen in das Rahmengestell eingesetzten Kannenkörper aufweist und das Rahmengestell mit Durchbrechungen versehen ist, durch die hindurch Teile der äußeren Umfangsfläche des Kannenkörpers sichtbar sind, wobei der Kannenkörper als Austauschkörper ausgebildet ist, der aus einer Anzahl gleichartiger Kannenkörper mit unterschiedlichem Design und/oder aus unterschiedlichem Werkstoff ausgewählt und in das Rahmengestell auswechselbar eingesetzt ist und daß die Schau-, Verkaufs- und Verpackungsanordnung versehen ist mit einem Vorrat an Verpackungseinheiten, die jeweils mindestens mit einem Isoliergefäß vorbestückt und mit Aufnahmen für Einzelteile jeweils eines Kannengehäuses ausgestattet sind, sowie mit einem Schau- und Verkaufsständer, der ein Unterteil, das einen Aufnahmeraum für den Vorrat an Verpackungseinheiten bildet, und ein mit dem Unterteil verbundenes Oberteil aufweist, das seinerseits mit Halterungen für einen Vorrat an unterschiedlichen, nach Wunsch bausatzartig zusammenstellbaren Kannengehäuse-Einzelteilen versehen ist.

Die Kosten des Kannenkörpers stellen häufig nur einen kleinen Bruchteil der Gesamtkosten einer Isolierkanne dar. Durch ein Auswechseln nur dieses vergleichsweise billigen Einzelteils läßt sich erfindungsgemäß der ästhetische Gesamteindruck der Isolierkanne bedarfsweise rasch und einfach ändern. Es ist auf diese Weise nicht nur möglich, mit bescheidenem Aufwand Modetrends zu folgen, sondern es kann auch eine Anpassung an besondere Gelegenheiten, beispielsweise verschiedene Feste (so unter anderem Weihnachten, Neujahr, Ostern, Muttertag, Hochzeit, Jubiläum, Kinderfest), oder an andere Gegebenheiten, wie zum Beispiel an gegebenenfalls in dem betreffenden Haushalt vorhandene unterschiedliche Service oder verschiedenartige anderweitige Tischdekorationen, erfolgen. Durch einen entsprechenden Austausch des Kannenkörpers kann beispielsweise ferner eine nachträgliche Aufwertung der Isolierkanne vorgenommen werden. So kann die Isolierkanne in einer jungen Familie zunächst mit einem billigen Kunststoff-Kannenkörper angeschafft werden. Später läßt sich der Kunststoff-Kannenkörper durch einen Kannenkörper aus Metall, wie Messing verchromt, poliert oder lackiert, Aluminium eloxiert, rein Kupfer oder Kupfer verchromt oder Edelstahl poliert oder lackiert, ersetzen. Auch eine weitere Aufwertung auf silber- oder goldplattierte Ausführungen ist entsprechend einfach möglich. Eine zusätzliche Alternative stellen doppelwandige Kannenkörper aus Acrylglas oder dergleichen dar, bei denen der Zwischenraum beispielsweise mit gefärbtem Granulat oder ähnlichem Dekor-Füllmaterial gefüllt sein kann. In allen diesen Fällen können die übrigen Teile der Isolierkanne, so insbesondere das Isoliergefäß und das Rahmengestell, weiterbenutzt werden. Dies führt zu einer erheblichen Einsparung an Resourcen und einer entsprechenden Entlastung des Rohstoffmarktes. Es versteht sich, daß der ausgetauschte Kannenkörper nicht weggeworfen zu werden braucht, sondern für einen späteren erneuten Einsatz aufbewahrt werden kann.

Die erfindungsgemäße Schau-, Verkaufs- und Verpackungsanordnung erlaubt es dem Käufer einer Isolierkanne, sich seine Kanne nach eigenem Geschmack selbst zusammenzustellen, indem er eine entsprechende Auswahl unter dem Vorrat an unterschiedlichen Kannengehäuse-Einzelteilen trifft, beispielweise unter Farb- und/oder Design- und/oder Deko-Gesichtspunkten und indem er diese Einzelteile in einer mindestens mit dem Isoliergefäß vorbestückten Verpackungseinheit verstaut.

In weiterer Ausgestaltung der Erfindung gehören zu der Vorbestückung der Verpackungseinheiten neben dem Isoliergefäß auch ein auf das Isoliergefäß aufgesetzter Dichtring und ein Boden des Kannengehäuses. Eine solche Ausführungsform eignet sich insbesondere für Fälle, in denen der Boden keinen oder jedenfalls keinen nennenswerten Einfluß auf den optischen Gesamteindruck der Isolierkanne hat, weil er in dem Kannengehäuse weitgehend verschwindet. Es versteht sich jedoch, daß bei Kannenkonstruktionen, bei denen der Boden als sichtbares Designelement ausgebildet ist, gegebenenfalls auch der Boden zu den Einzelteilen des Kannengehäuses gehören kann, die sich der Käufer individuell aussucht.

Die Aufnahmen der Verpackungseinheiten sind vorzugsweise zum Aufnehmen jeweils eines Rahmengestells, eines in das Rahmengestell einsetzbaren Kannenkörpers sowie eines Deckels zum Verschließen des in das Kannengehäuse eingesetzten Isoliergefäßes ausgebildet. In einem solchen Fall sind die Halterungen des Schau- und Verkaufsständers zum Haltern jeweils einer Mehrzahl von Rahmengestellen, Kannenkörpern und Deckeln ausgebildet.

Der Schau- und Verkaufsständer ist zweckmäßig thekenförmig ausgebildet und mit einer Fläche zum Auflegen jeweils einer mit den Kannengehäuse-Einzelteilen zu bestückenden Verpackungseinheit versehen. Dadurch ist gewährleistet, daß der Käufer beim Zusammenstellen der Kanne alle Einzelteile des Kannengehäuses und die Verpackungseinheit in bequemer Reichweite hat.

Der Aufnahmeraum für die Verpackungseinheiten kann vorne und hinten geschlossen sowie beidseitig offen sein. Das Oberteil des Schau- und Verkaufsständers ist zweckmäßig als Verlängerung einer Rückwand des Ständer-Unterteils ausgebildet.

Weitere Ausgestaltungen der Erfindung ergeben sich aus den Unteransprüchen.

Bevorzugte Ausführungsbeispiele der Isolierkanne und der Schau-, Verkaufs- und Verpackungsanordnung nach der Erfindung sind nachstehend unter Bezugnahme auf die Zeichnungen näher erläutert. Es zeigen:

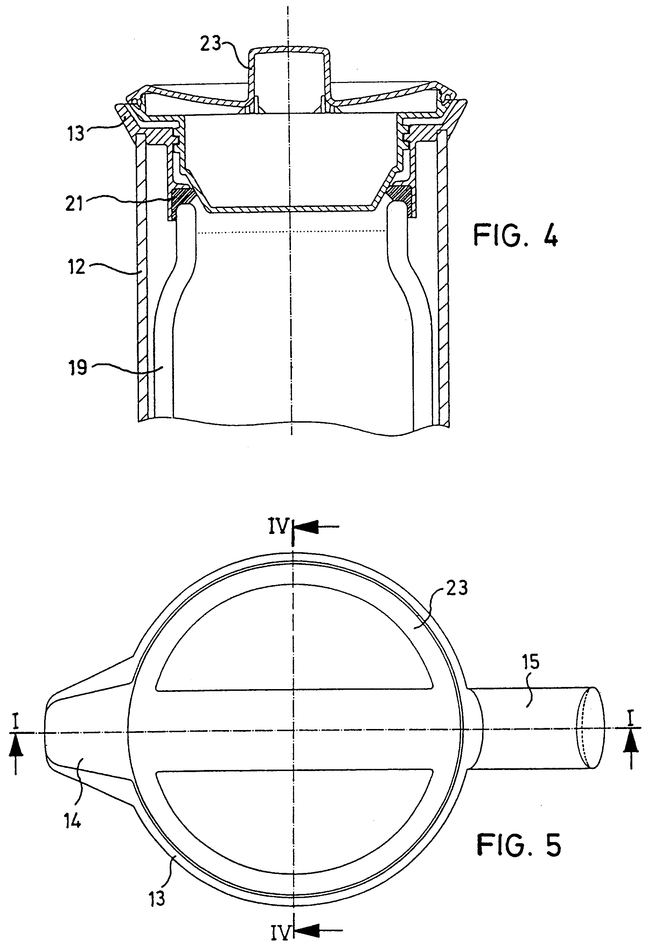

- Fig. 1: einen Längsschnitt der Isolierkanne entlang der Linie I-I der Fig.5,
- Fig. 2: eine Ansicht der Ausgießerseite der Isolierkanne,
- Fig. 3: eine Ansicht der Griffseite der Isolierkanne,
- Fig. 4: einen Teilschnitt entlang der Linie IV-IV der Fig. 5,
- Fig. 5: eine Draufsicht auf die Isolierkanne,
- Fign. 6 - 13: schematische Seitenansichten der Isolierkanne bei Auswechseln des Kannenkörpers.
- Fig. 14: in schematischer perspektivischer Darstellung einen Schau-und Verkaufsständer mit im Aufnahmeraum untergebrachten Verpackungseinheiten und mit einem Vorrat an vom Käufer auszuwählenden Kannengehäuse-Einzelteilen,
- Fign. 15 und 16: in kleinerem Maßstab eine Seitenansicht und eine weiter schematisierte perspektivische Ansicht des Schau- und Verkaufsständers gemäß Fig. 14,
- Fig. 17: eine perspektivische Ansicht eines Schau- und Verkaufsständers in geringfügig abgewandelter Ausführungsform, und
- Fign. 18 und 19: Draufsichten auf die Zuschnitte eines Verpackungskartons und eines Kartoneinsatzes der Verpackungseinheit,

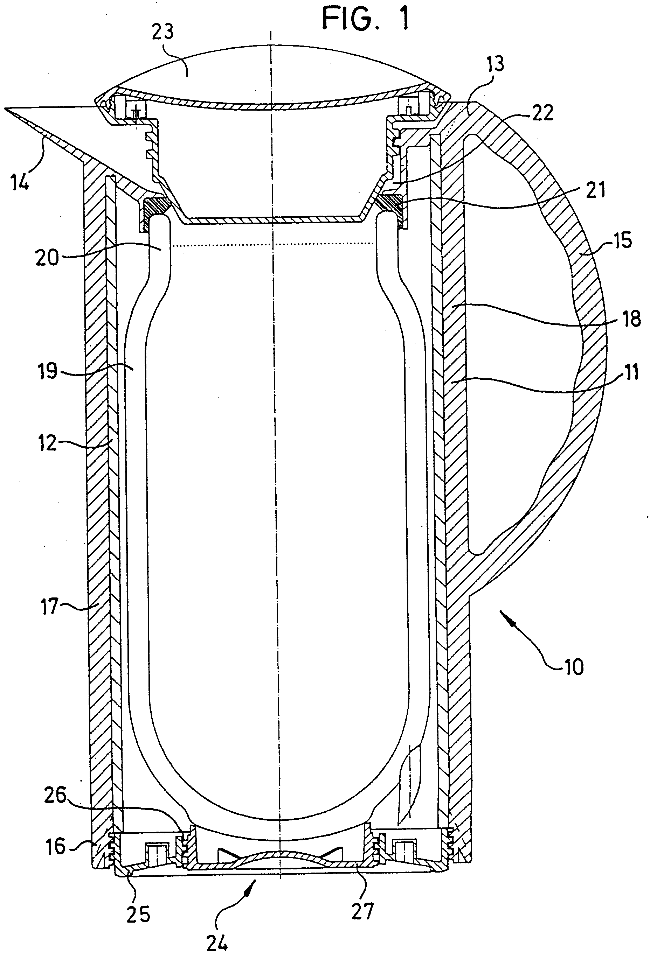

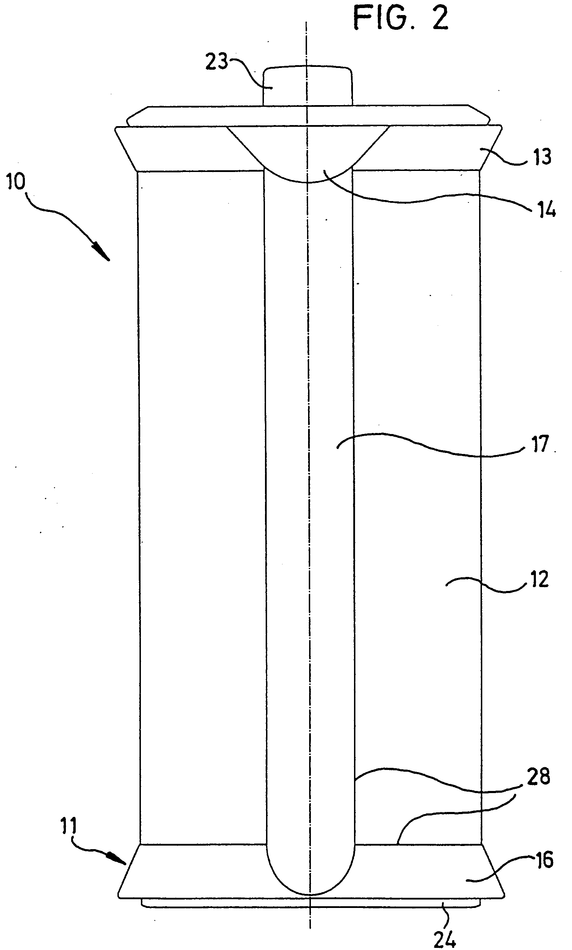

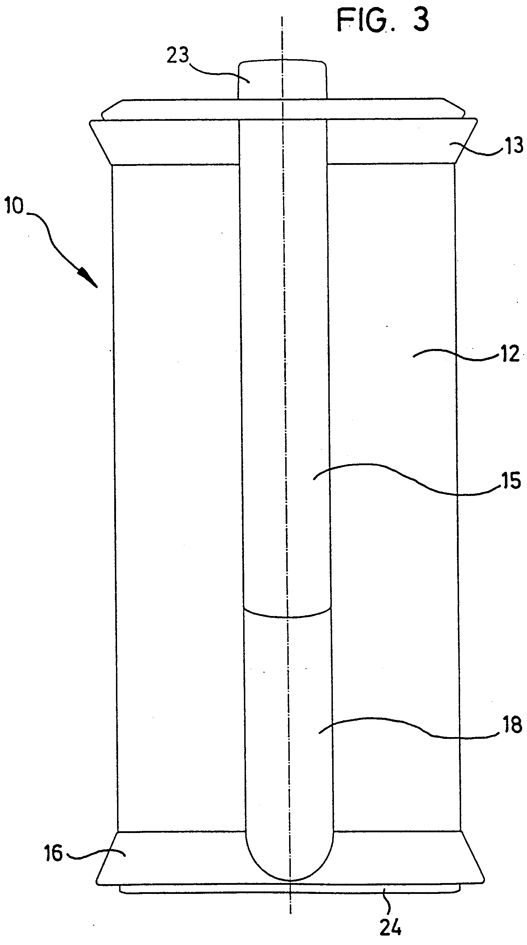

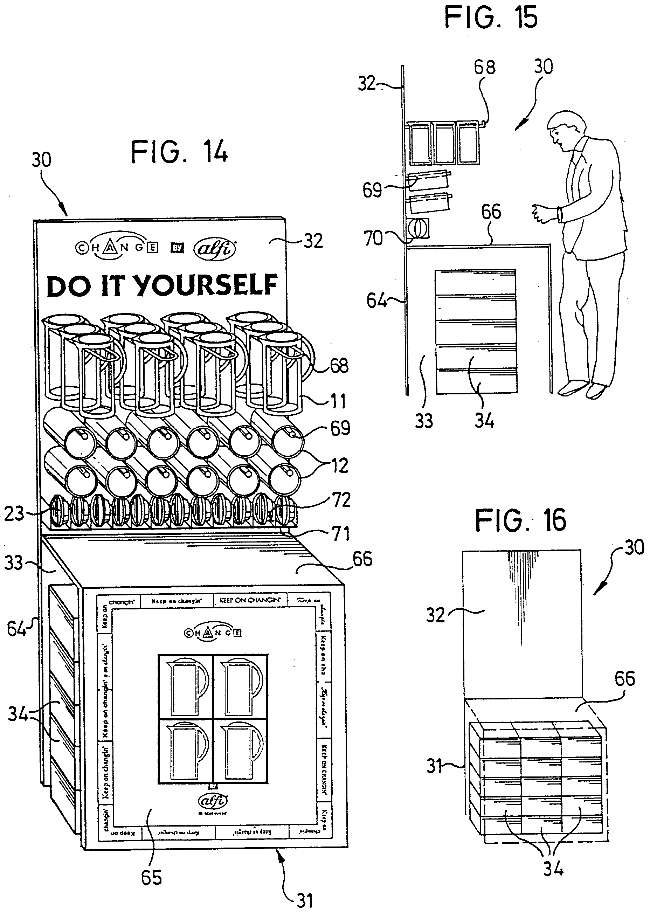

Die in den Fign. 14 bis 19 dargestellte Schau-, Verkaufs- und Verpackungsanordnung ist für Isolierkannen bestimmt, die entsprechend den Fign. 1 bis 3 ein Kannengehäuse 10 aufweisen, zu dem ein Rahmengestell 11 und ein in dieses Rahmengestell eingesetzter Kannenkörper 12 in Form eines geraden, hohlen Kreiszylinders gehören. Das Rahmengestell 11 umfaßt seinerseits eine Deckplatte 13, eine Ausgießertülle 14, einen Griff 15 und einen Fußring 16, der mit den übrigen Teilen 13, 14 und 15 des Rahmengestells über zwei Säulen 17 und 18 verbunden ist. Im Falle der bevorzugten veranschaulichten Ausführungsform stehen sämtliche Teile des Rahmengestells 11 untereinander in einstückiger Verbindung.

In das Kannengehäuse 10 ist ein Isoliergefäß 19, vorzugsweise in Form eines doppelwandigen, evakuierten Isolierglaseinsatzes oder eines Isoliermetalleinsatzes oder eines wärmeisolierenden Kunststoffeinsatzes, eingebracht. Dabei liegt das offene obere Ende 20 des Isoliergefäßes 19 an einem Widerlager an, das von einem Dichtring 21 gebildet ist, der im Ausgußbereich an der Unterseite der Deckplatte 13 sitzt und eine in der Deckplatte 13 ausgebildete, mit Innengewinde versehene Ausgießöffnung 22 umgreift. In die Ausgießöffnung 22 kann zum Verschließen der Isolierkanne ein Deckel 23 mit Gewindestopfen eingeschraubt werden. Bei Verwendung eines evakuierten Isolierglaseinsatzes ist dieser zweckmäßig außen mit einer Schicht überzogen, die verhindert, daß bei einem etwaigen Bruch des Glases Glassplitter wegfliegen.

Das Isoliergefäß 19, das Rahmengestell 11 und der Kannenkörper 12 werden mittels eines insgesamt mit 24 bezeichneten Bodens zusammengehalten, der in dem unteren Endabschnitt des Kannengehäuses 10 lösbar befestigt ist und der sich von unten gegen das Isoliergefäß 19 anlegt. Der Boden 24 ist zweiteilig ausgebildet. Er weist einen Bodenring 25 auf, der in den Fußring 16 des Rahmengestells 11 eingeschraubt ist. In eine mit Innengewinde versehene Mittelöffnung 26 des Bodenringes 25 ist eine Bodenschraube 27 eingeschraubt, deren Mittelachse mit der Längssymmetrieachse des Isoliergefäßes 19 ausgerichtet ist und die sich von unten gegen das Isoliergefäß 19 anlegt. Das Rahmengestell 11 begrenzt mit der Deckplatte 13, dem Fußring 16 und den Säulen 17, 18 zwei großflächige Durchbrechungen 28, durch die hindurch größere Teile der äußeren Umfangsfläche des Kannenkörpers 12 sichtbar sind.

Das Rahmengestell 11, der Kannenkörper 12, der Gewindestopfen 23 und der Boden 24 können insbesondere aus Metall und/oder Kunststoff gefertigt sein.

Der Kannenkörper 12 der erläuterten Isolierkanne ist als Austauschkörper ausgebildet, der beim Hersteller und/oder beim Händler und/oder beim Benutzer aus einer Anzahl gleichartiger Kannenkörper mit unterschiedlichem Design, insbesondere mit unterschiedlicher Bedruckung der Außenoberfläche des Kannenkörpers, ausgewählt werden kann. Der gewählte Kannenkörper kann dann mit wenigen, einfachen Handgriffen installiert, beziehungsweise gegen einen vorhandenen Kannenkörper ausgewechselt werden.

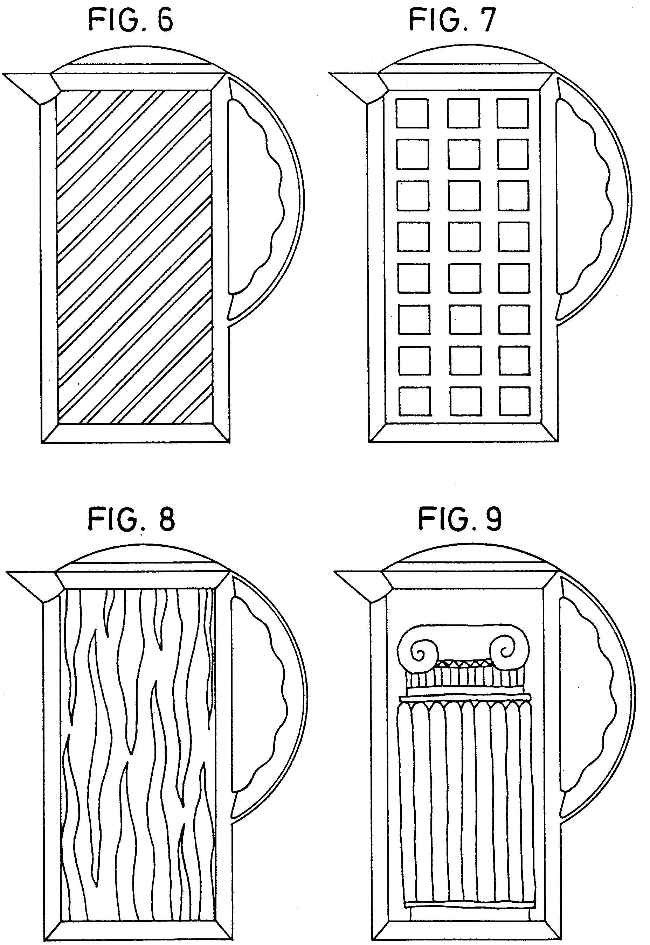

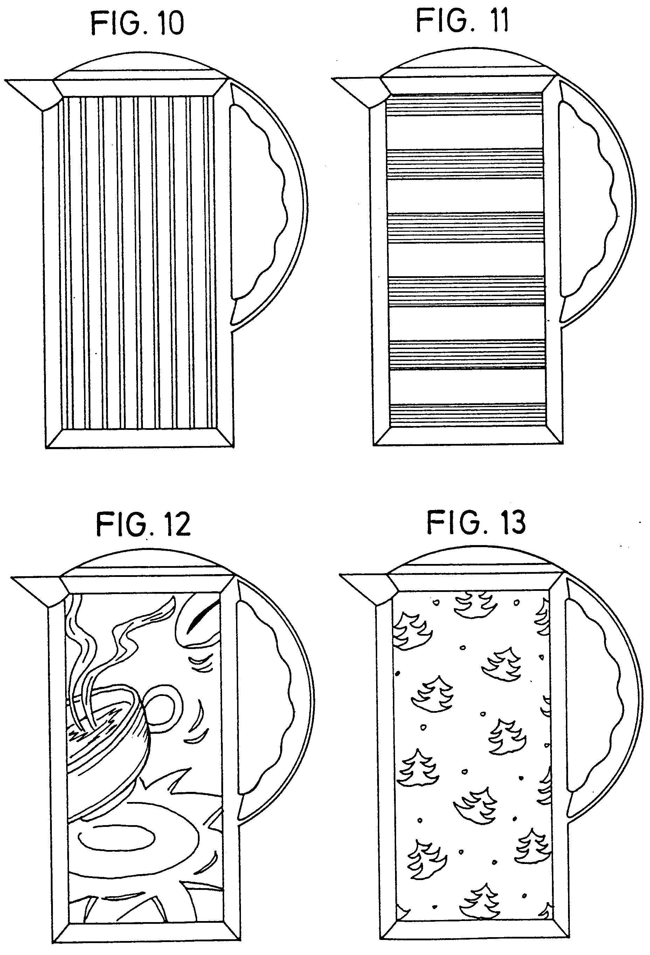

Die Figuren 6 bis 13 zeigen in Schwarz/Weiß-Darstellung eine kleine Gruppe möglicher Designs. Diese und andere Designs können sich nicht nur hinsichtlich der jeweiligen bildlichen Darstellung und gegebenenfalls Beschriftung, sondern auch in ihrer Farbgebung voneinander unterscheiden.

Zu der Schau-, Verkaufs- und Verpackungsanordnung gehört ein Schau- und Verkaufsständer 30 mit einem Unterteil 31 und einem Oberteil 32. Das Unterteil 31 bildet einen Aufnahmeraum 33 für einen Vorrat an Verpackungseinheiten 34. Jede der Verpackungseinheiten 34 weist einen Verpackungskarton 35 mit einem Einsatz 36 auf, der mit jeweils einem Isoliergefäß 19, auf dessen oberes Ende 20 der Dichtring 21 aufgesetzt und mit einem Kannengehäuse-Boden 24 bestückt ist. Die aus Isoliergefäß 19 und Dichtung 21 bestehende Anordnung ist, sofern evakuiertes Isolierglas verwendet wird, aus Gründen der Bruchsicherheit zweckmäßigerweise in Folie verpackt, z.B. eingeschweißt.

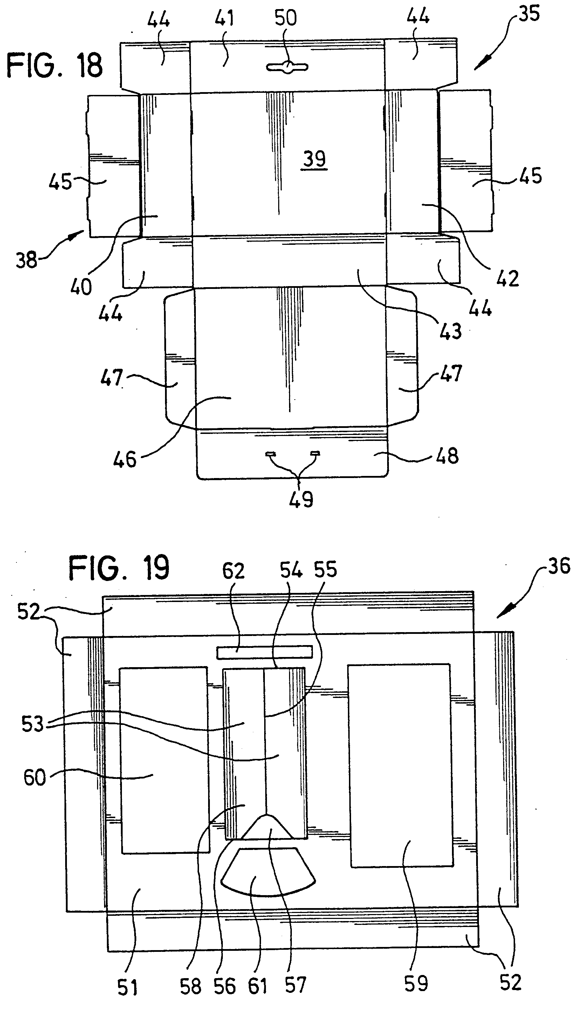

Gestanzte Zuschnitte für den Karton 35 und seinen Einsatz 36 sind in den Fign. 18 und 19 veranschaulicht. Der Karton 35 (Fig. 18) weist ein Unterteil 38 mit einem Boden 39 und Seitenwänden 40 bis 43 auf, die von Klappen 44 und 45 im aufgestellten Zustand gehalten werden. An die Seitenwand 43 schließt ein Deckel 46 mit Klappen 47, 48 an. Durch Schlitze 49 der Klappe 48 können die Enden eines nicht dargestellten Griffes gesteckt werden, der bei geschlossenem Karton 35 durch einen Schlitz 50 der Klappe 41 vorragt.

Der Einsatz 36 (Fig. 19) weist ein Hauptteil 51 auf, von dem Seitenteile 52 und zwei Klappen 53 nach unten abklappbar sind. Die Klappen 53 sind entlang Stanzlinien 54 bis 56 freigestanzt. Sie bilden zusammen mit einer Ausstanzung 57 eine Lagerung 58 für die aus Isoliergefäß 19 und Dichtring 21 bestehende Einheit. Weitere Ausstanzungen in dem Hauptteil 51 des Einsatzes 36 bilden Aufnahmen 59 bis 62 für jeweils ein Rahmengestell 11, einen Kannenkörper 12, einen Deckel 23 und einen Kannenboden 24.

Das Unterteil 31 des Schau- und Verkaufsständers 30 wird im veranschaulichten Ausführungsbeispiel von einer Rückwand 64, einer Frontwand 65 und einer Auflagefläche 66 gebildet, so daß der Aufnahmeraum 33 von vorne und hinten geschlossen sowie beidseitig offen ist. Auf die Fläche 66 kann jeweils eine mit den Kannengehäuse-Einzelteilen 11, 12 und 23 zu bestückende Verpackungseinheit 34 aufgelegt werden. Das Oberteil 32 des Schau- und Verkaufsständers 30 stellt eine Verlängerung der Rückwand 64 dar. Das Oberteil 32 trägt an seiner Vorderseite Halterungen 68, 69 und 70 für einen Vorrat an Rahmengestellen 11, Kannenkörpern 12 und Deckeln 23. Bei den Halterungen 68 für die Rahmengestelle 11 kann es sich beispielsweise um von der Vorderseite des Oberteils 32 vorragende Aufhängebügel handeln. Die Halterungen 69 für die Kannenkörper 12 können als einfache Aufhängearme ausgebildet sein, während als Halterung 70 für die Deckel 23 eine Leiste 71 nach Art eines Regalbodens vorgesehen sein kann, von der Trennwände 72 hochstehen.

Beim Verkäufer wird der Schau- und Verkaufsständer 30 in der aus den Fign. 14 bis 16 ersichtlichen Weise mit Verpackungseinheiten 34 und Kannengehäuse-Einzelteilen 11, 12 und 23 bestückt. Der Käufer greift sich eine der Verpackungseinheiten 34 und legt diese auf die Fläche 66 auf. In der Verpackungseinheit 34 befinden sich bereits der komplette Gehäuseboden 24 und das Isoliergefäß 19 mit aufgesetztem Dichtring 21. Der Käufer stellt sich dann seine Isolierkanne zusammen, indem er einen der nach Design, Werkstoff oder Aufbau (z.B. ein- oder zweischalig) unterschiedlichen Kannenkörper 12 und davon abhängig jeweils eines der unterschiedlichen Rahmengestelle 11 und einen der unterschiedlichen Deckel 23 auswählt. Wie geschildert, können auch die Rahmengestelle 11 und die Deckel 23 nach Farbe, Design, Werkstoff und gegebenenfalls Form unterschiedlich ausgebildet sein. Die Einzelteile sind jedoch so ausgelegt, daß sie unabhängig von Farbe, Werkstoff, Design usw. zusammengebaut werden können. Die ausgewählten Einzelteile 11, 12, 23 werden in die zugehörigen Aufnahmen 50, 60 und 61 eingelegt. Dann wird der Karton 35 geschlossen. Zuhause montiert der Käufer die Isolierkanne, der eine ausführliche Montageanweisung und ein Montageschlüssel zum Verschrauben der Einzelteile beiliegt, mit wenigen einfachen Handgriffen. Dazu werden der Kannenkörper 12 und das Isoliergefäß 19 mit aufgesetztem Dichtring 21 in das Rahmengestell 11 von dessen Bodenseite aus eingeschoben. Dann werden Kannenkörper und Isoliergefäß mit Bezug auf das Rahmengestell festgelegt, indem der Boden 24 mit seinem Bodenring 25 in den Fußring 16 des Rahmengestells 11 mittels mitgeliefertem Montageschlüssel eingeschraubt wird. Mittels der Bodenschraube 27 kann das Isoliergefäß 19 mit seinem Dichtring 21 gegen die Deckplatte 13 des Rahmengestells 11 fest angedrückt werden.

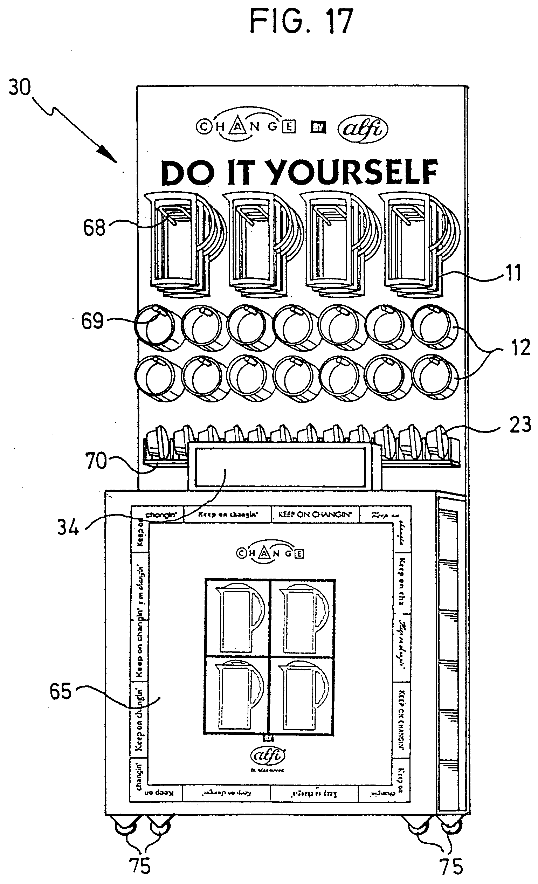

Die Ausführungsform gemäß Fig. 17 unterscheidet sich von derjenigen nach den Fign. 14 und 16 im wesentlichen nur dadurch, daß an der Unterseite des Unterteils 31 Laufrollen 75 angebracht sind, die ein müheloses Verschieben des Schau- und Verkaufsständers erlauben.

## Patentansprüche

1. Isolierkanne mit einem Isoliergefäß, das in einem Kannengehäuse untergebracht ist, wobei das Kannengehäuse (10) ein Rahmengestell (11) und einen in das Rahmengestell eingesetzten Kannenkörper (12) aufweist und wobei der Kannenkörper (12) als Austauschkörper ausgebildet ist, der in das Rahmengestell (11) auswechselbar eingesetzt ist dadurch gekennzeichnet, daß das Rahmengestell mit Durchbrechungen versehen ist, durch die hindurch Teile der äußeren Umfangsfläche des Kannenkörpers sichtbar sind, und daß der Kannenkörper (12) aus einer Anzahl gleichartiger Kannenkörper mit unterschiedlichem Design und/oder aus unterschiedlichem Werkstoff ausgewählt ist.

2. Isolierkanne nach Anspruch 1, dadurch gekennzeichnet, daß der Kannenkörper (12) im wesentlichen als Hohlzylinder ausgebildet ist.

3. Isolierkanne nach Anspruch 1 oder 2, dadurch gekennzeichnet, daß die Kannenkörper (12) an ihrer äußeren Umfangsfläche mit unterschiedlichen Designs bedruckt sind.

4. Isolierkanne nach einem der vorhergehenden Ansprüche, dadurch gekennzeichnet, daß das Rahmengestell (11) eine Deckplatte (13), eine Ausgießertülle (14), einen Griff (15) und einen Fußring (16) aufweist, der mit den übrigen Teilen (13, 14, 15) des Rahmengestells über Säulen (17, 18) verbunden ist.

5. Schau-, Verkaufs- und Verpackungsanordnung für Isolierkannen gemäß einem der vorhergehenden Ansprüche 1-4, die jeweils ein Isoliergefäß und ein mehrteiliges Kannengehäuse aufweisen, dadurch gekennzeichnet, daß die Anordnung versehen ist mit einem Vorrat an Verpackungseinheiten (34), die jeweils mindestens mit einem Isoliergefäß (19) vorbestückt und mit Aufnahmen (59, 60, 61) für Einzelteile (11, 12, 23) jeweils eines Kannengehäuses (10) ausgestattet sind, sowie mit einem Schau- und Verkaufsständer (30), der ein Unterteil (31), das einen Aufnahmeraum (33) für den Vorrat an Verpackungseinheiten (34) bildet, und ein mit dem Unterteil verbundenes Oberteil (32) aufweist, das seinerseits mit Halterungen (68, 69, 70) für einen Vorrat an unterschiedlichen, nach Wunsch bausatzartig zusammenstellbaren Kannengehäuse-Einzelteilen (11, 12, 23) versehen ist.

6. Schau-, Verkaufs- und Verpackungsanordnung nach Anspruch 5, dadurch gekennzeichnet, daß zu der Vorbestückung der Verpackungseinheiten (34) auch ein auf das Isoliergefäß aufgesetzter Dichtring (21) und ein Boden (24) des Kannengehäuses (10) gehören.

7. Schau-, Verkaufs- und Verpackungsanordnung nach Anspruch 5 oder 6, dadurch gekennzeichnet, daß die Aufnahmen (59, 60, 61) der Verpackungseinheiten (34) zum Aufnehmen jeweils eines Rahmengestells (11), eines in das Rahmengestell einsetzbaren Kannenkörpers (12) sowie eines Deckels (23) zum Verschließen des in das Kannengehäuse (10) eingesetzten Isoliergefäßes (19) ausgebildet sind, wobei das Rahmengestell mit Durchbrechungen (28) versehen ist, durch die hindurch Teile der äußeren Umfangsfläche des Kannenkörpers sichtbar sind.

8. Schau-, Verkaufs- und Verpackungsanordnung nach einem der Ansprüche 5 bis 7, dadurch gekennzeichnet, daß die Halterungen (68, 69, 70) des Schau- und Verkaufsständers (30) zum Haltern jeweils einer Mehrzahl von Rahmengestellen (11), Kannenkörpern (12) und Deckeln (23) ausgebildet sind.

9. Schau-, Verkaufs- und Verpackungsanordnung nach einem der Ansprüche 5 bis 8, dadurch gekennzeichnet, daß der Schau- und Verkaufsständer (30) thekenförmig ausgebildet und mit einer Fläche (66) zum Auflegen jeweils einer mit den Kannengehäuse-Einzelteilen (11, 12, 23) zu bestückenden Verpackungseinheit (34) versehen ist.

10. Schau-, Verkaufs- und Verpackungsanordnung nach einem der Ansprüche 5 bis 9, dadurch gekennzeichnet, daß der Aufnahmeraum (33) für die Verpackungseinheiten (34) vorne und hinten geschlossen sowie beidseitig offen ist.

11. Schau-, Verkaufs- und Verpackungsanordnung nach einem der Ansprüche 5 bis 10, dadurch gekennzeichnet, daß das Oberteil (32) des Schau- und Verkaufsständers (30) als Verlängerung einer Rückwand (64) des Ständerunterteils (31) ausgebildet ist.

## Claims

1. An insulating jug with an insulating vessel which is accommodated in a jug housing, the jug housing (10) comprising a frame (11) and a jug body (12) inserted into the frame and the jug body (12) being constructed as an exchangeable body which is interchangeably inserted into the frame (11), characterised in that the frame is provided with apertures through which parts of the outer peripheral surface of the jug body are visible and in that the jug body (12) is constructed as an interchangeable body which is selected from a number of equivalent jug bodies of different design and/or different material.

2. An insulating jug according to claim 1, characterised in that the jug body (12) is constructed substantially as a hollow cylinder.

3. An insulating jug according to claim 1 or 2, characterised in that the jug body (12) has different designs printed on its outer peripheral surface.

4. An insulating jug according to one of the preceding claims, characterised in that the frame (11) comprises a top plate (13), a pourer (14), a handle (15) and a base ring (16) which is connected to the other parts (13, 14, 15) of the frame through columns (17, 18).

5. A display, sales and packaging arrangement for insulating jugs according to one of the preceding claims 1 to 4, which in each case comprises an insulating vessel and a multi-part jug housing, characterised in that the arrangement is provided with a stock of packaging units (34) which are in each case already equipped with at least one insulating vessel (19) and with holders (59, 60, 61) for components (11, 12, 23) of in each case a jug housing (10), and with a display and sales stand (30) provided with a base (31) which forms a receiving space (33) for the stock of packaging units (34) and an upper part (32) connected to the base and which is provided on the one hand with supports (68, 69, 70) for a stock of different jug housing components (11, 12, 23) which can be assembled together as required in the manner of a construction kit.

6. A display, sales and packaging arrangement according to claim 5, characterised in that the existing equipment of the packaging units (34) also includes a gasket (21) fitted onto the insulating vessel and a bottom (24) of the jug housing (10).

7. A display, sales and packaging arrangement according to claim 5 or 6, characterised in that the holders (59, 60, 61) of the packaging units (34) are constructed to accommodate in each case a frame (11), a jug body (12) insertable into the frame and a lid (23) for closing the insulating vessel (19) which has been inserted into the jug housing (10), the frame being provided with apertures (28) through which parts of the outer peripheral surface of the jug body are visible.

8. A display, sales and packaging arrangement according to one of claims 5 to 7, characterised in that the supports (68, 69, 70) of the display and sales stand (30) are constructed to support in each case a plurality of frames (11), jug bodies (12) and lids (23).

9. A display, sales and packaging arrangement according to one of claims 5 to 8, characterised in that the display and sales stand (30) is of counter-like construction and is provided with a surface (66) onto which it is possible to lay out a packaging unit (34) which has to be equipped with the jug housing components (11, 12, 23).

10. A display, sales and packaging arrangement according to one of claims 5 to 9, characterised in that the receiving space (33) for the packaging units (34) is closed at the front and rear and is open at both sides.

11. A display, sales and packaging arrangement according to one of claims 5 to 10, characterised in that the upper part (32) of the display and sales stand (30) is constructed as an extension of a rear wall (64) of the stand base (31).

## Revendications

1. Vase isolant avec un récipient isolant, qui est logé dans un boîtier de vase, le boîtier de vase (10) présentant une monture (11) et un corps de vase (12) inséré dans la monture, et le corps de vase (12) étant constitué sous la forme d'un corps interchangeable, qui est inséré dans la monture (11) de manière interchangeable, vase isolant caractérisé en ce que la monture est pourvue d'ajours à travers lesquels des parties de la surface périphérique extérieure de corps de vase sont visibles, et en ce que le corps de vase (12) est sélectionné parmi un certain nombre de corps de vase de même type avec des styles différents et/ou des matières différentes.

2. Vase isolant selon la revendication 1, caractérisé en ce que le corps de vase (12) est constitué essentiellement sous la forme d'un cylindre creux.

3. Vase isolant selon la revendication 1 ou 2, caractérisé en ce que l'on imprime sur les corps de vase (12) des motifs différents sur leur surface périphérique extérieure.

4. Vase isolant selon l'une des revendications précédentes, caractérisé en ce que la monture (11) présente une plaque de recouvrement (13), un bec verseur (14), une poignée (15) et un anneau de piétement (16), qui est relié aux autres parties (13,14,15) de la monture par l'intermédiaire de colonnes (17, 18).

5. Agencement d'exposition, de vente et d'emballage pour des vases isolants, selon l'une des revendications précédentes 1 à 4, vases qui présentent respectivement un récipient isolant et un boîtier de vase en plusieurs parties, agencement caractérisé en ce qu'il est pourvu d'une réserve d'unités d'emballage (34), qui sont prégarnies respectivement d'au moins un récipient isolant (19) et sont équipées de logements (59, 60, 61) pour recevoir les pièces détachées (11, 12, 23) respectivement d'un boîtier de vase (10), et d'un présentoir d'exposition et de vente (30), qui présente une partie inférieure (31) qui forme un volume de réception (33) pour la réserve d'unités d'emballage (34), et une partie supérieure (32), reliée à la partie inférieure, partie supérieure qui, de son côté, est pourvue de supports (68, 69, 70) pour une réserve de différentes pièces détachées (11, 12, 23) de boîtier de vase pouvant être assemblées à volonté, en étant du type prêt à monter.

6. Agencement d'exposition, de vente et d'emballage selon la revendication 5, caractérisé en ce qu'une bague d'étanchéité (21), montée sur le récipient isolant, et un fond (24) du boîtier de vase (10) font aussi partie du prégarnissage des unités d'emballage (34).

7. Agencement d'exposition, de vente et d'emballage selon la revendication 5 ou 6, caractérisé en ce que les logements (59, 60, 61) des unités d'emballage (34) sont constitués pour recevoir respectivement une monture (11), un corps de vase (12) que l'on peut insérer dans la monture, et un couvercle (23), qui sert à fermer le récipient isolant (19), inséré dans le boîtier de vase (10), la monture étant pourvue d'ajours (28), à travers lesquels des parties de la surface périphérique extérieure du corps de vase sont visibles.

8. Agencement d'exposition, de vente et d'emballage selon l'une des revendications 5 à 7, caractérisé en ce que les supports (68, 69, 70) du présentoir d'exposition et de vente (30) sont constitués pour supporter respectivement une multiplicité de montures (11), de corps de vase (12) et de couvercles (23).

9. Agencement d'exposition, de vente et d'emballage selon l'une des revendications 5 à 8, caractérisé en ce que le présentoir d'exposition et de vente (30) est constitué sous la forme d'un présentoir d'étalage et est pourvu d'une face (66), qui sert à la pose de respectivement une unité d'emballage (34) à garnir avec les pièces détachées (11, 12, 23) du boîtier de vase.

10. Agencement d'exposition, de vente et d'emballage selon l'une des revendications 5 à 9, caractérisé en ce que le volume de réception (33) pour les unités d'emballage (34) est fermé sur l'avant et sur l'arrière et est ouvert sur les deux côtés.

11. Agencement d'exposition, de vente et d'emballage selon l'une des revendications 5 à 10, caractérisé en ce que la partie supérieure (32) du présentoir d'exposition et de vente (30) est constituée sous la forme d'un prolongement d'une paroi arrière (64) de la partie inférieure (31) du présentoir.
